# EUROPÄISCHE PATENTSCHRIFT

(11) **EP 1 712 867 B1**
(45) Veröffentlichungstag und Bekanntmachung des Hinweises auf die Patenterteilung: **02.03.2011**
(21) Anmeldenummer: 05007779.1
(22) Anmeldetag: 08.04.2005
(51) Int. Cl.: F28F 19/00, F28F 9/18, F28F 21/08, F16L 41/08

(54) **Verfahren zur Verbindung eines Rohres mit einer Rohrplatte**
Process to join a tube with a tube plate
Procédé permettant de joindre un tube avec une plaque tubulaire

(43) Veröffentlichungstag der Anmeldung: 18.10.2006
(73) Patentinhaber: Balcke-Dürr GmbH, 40882 Ratingen (DE)
(72) Erfinder: Bruckmann, Wilhelm, 46049 Oberhausen (DE); Hegner, Wolfgang Dr., 46236 Bottrop (DE)
(74) Vertreter: Lang, Friedrich

(56) Entgegenhaltungen:
- EP-A- 0 053 248
- DE-B- 1 093 391
- FR-A- 2 447 530
- GB-A- 2 296 560
- US-A- 3 317 222
- US-A- 3 750 747
- US-A- 4 401 153
- US-A1- 2003 192 680

## Beschreibung

Die vorliegende Erfindung betrifft ein Verfahren zur Verbindung eines Rohres aus austenitischem Stahl mit einer Rohrplatte aus Kohlenstoffstahl, bei dem das Rohr mit seiner Außenseite an der Wand eines Rohrlochs in der Rohrplatte befestigt wird., gemäß dem Oberbegriff von Anspruch 1.

Solche Verfahren kommen unter anderem bei der Ertüchtigung von vorhandenen Turbinenkondensatoren in Kraftwerken zur Anwendung. Turbinenkondensatoren kondensieren den hinter Dampfturbinen entstehenden Niederdruckdampf. Aufgrund der niedrigen Drücke hinter der Dampfturbine entstehen sehr große Dampfvolumen, die zwangsläufig zu sehr hohen Eintrittsgeschwindigkeiten im Turbinenkondensator führen. Infolge dieser hohen Geschwindigkeiten und der im Dampf enthaltenen Wassertropfen, treten an vielen Turbinenkondensatoren, insbesondere an den der Eintrittsstörung zugewandten Randrohren, Materialabtragungen durch die sogenannte Tropfenschlagerosion auf.

Das Problem der Tropfenschlagerosion verstärkt sich zudem nach Leistungserhöhungen der Dampfturbinen oder in Anlagen mit zumindest zeitweise sehr kalten Kühlwassereintrittstemperaturen, da diese ein besonders großes Vakuum und somit sehr hohe Geschwindigkeiten in den Turbinenkondensatoren erzeugen.

Zum Schutz vor Tropfenschlagerosion sind in einigen Kraftwerken auf die Kondensatorrohre Schutzschalen bzw. Schutzschichten aus erosionsfesten Werkstoffen wie Gummi, korrosionsfesten Kunststoffen oder Metallbeschichtungen von außen aufgebracht worden. Diese Schutzschichten schützen die Randrohre, reduzieren aber die Wärmeleistung der Kondensatoren und somit den Wirkungsgrad des Kraftwerks. Deshalb wird zur Zeit insbesondere in Seewassergekühlten Kraftwerken erwogen, die dort verwendeten, mit Schutzschichten aus Titan versehenen, Kondensatorrohre durch bruchfeste, weitgehend tropfenschlagbeständige Rohre aus austenitischem Stahl zu ersetzen. Dabei ist man auf Schwierigkeiten gestoßen, diese bruchfesten Rohre in den vorhandenen auf ihrer Seewasserseite mit Titan plattierten Rohrscheiben zu befestigen, da ein Verschweißen von Titanplattierung und Austenitrohr miteinander nicht möglich ist.
Ein Verfahren der eingangs genannten Art zum Verbinden eines Rohres ist aus US 3,317,222 bekannt. Ein Verfahren zum Schutz eines Wärmeaustauscherrohres mittels einer Schutzschicht wird in GB 2296560 A beschrieben. Ein Röhrenwärmeaustauscher mit Rohren aus austenitischem Stahl ist aus DE 1093391 bekannt.

Der Erfindung liegt daher die Aufgabe zugrunde, ein Verfahren zur Verbindung eines Rohres aus austenitischem Stahl mit einer Rohrplatte aus Kohlenstoffstahl anzugeben, das zu einer sicheren und dichten Verbindung des Rohres mit der Rohrscheibe führt.

Die Lösung dieser Aufgabe gelingt mit einem Verfahren gemäß Anspruch 1. Bevorzugte Ausführungen werden in den Unteransprüchen beschreiben. Zur Verbindung eines Rohres aus austenitischem Stahl mit einer Rohrplatte aus Kohlenstoffstahl wird das Rohr mit seiner Außenseite an der Wand eines Rohrlochs in der Rohrplatte befestigt. Dabei wird erfindungsgemäß ein Rohrende im Rohrloch nach innen beabstandet zu einer eintrittsseitigen Rohrplattenseite angeordnet und dort durch Aufweiten des Rohres festgelegt, wobei das Rohrende stirnseitig mit der Wand des Rohrloches verschweißt wird, und der sich zwischen dem Rohrende und der eintrittseitigen Rohrplattenseite erstreckende Bereich der Wand des Rohrloches mit einer Schutzschicht versehen wird. Die Schutzschicht sollte aus einem Material wie einem Metall, Kunststoff, Lack oder Gummi bestehen, das gegen Tropfenschlagerosion beständig ist. Bevorzugte Weiterbildungen des erfindungsgemäßen Verfahrens sind in den Unteransprüchen beschrieben.

Mit dem hier vorgestellten Verfahren ist es nunmehr möglich, tropfenschlagbeständige, hochfeste Rohre in Rohrscheiben zu befestigen, deren Festigkeit deutlich unter der der Rohre liegt. So werden insbesondere die zwischen den Rohren liegenden Stegbereiche der Rohrplatte und andere benachbarte Rohre beim Befestigen der Rohre geschont. Insbesondere wird der oberflächennahe Bereich der eintrittsseitige Rohrplattenseite nicht oder nur unbeachtlich beeinflusst. Damit ist die bei den üblichen Befestigungsverfahren mittels Einwalz-, Aufweit- oder Schweißtechnik stets vorhandene Gefahr der zu Undichtigkeiten und Korrosion führende Verformung der Stege der Rohrscheibe gebannt. Gleichzeitig kann das Verschweißen des Rohres nunmehr wesentlich genauer durchgeführt werden, da das Rohr sehr gut in der Rohrscheibe fixiert ist.

Der hier verwendete Begriff "eintrittsseitige Rohrplattenseite" soll nicht einschränkend in Bezug auf die Strömungsrichtung des durch die Rohre strömenden Fluids verstanden werden. Vielmehr dient er als Orientierungshilfe zur Kennzeichnung der Plattenseite, auf der die Rohre in der Rohrplatte enden, während sie auf der anderen Seite der Rohrplatte überstehen. Das heißt, dass ein Fluid prinzipiell auch an der eintrittsseitigen Rohrplattenseite aus dem Rohr austreten kann.

Erfindungsgemäß wird das Rohr in einem Abstand zur eintrittseitigen Rohrplattenseite angeordnet, der größer ist, als die Breite einer sich beim Schweißen einstellende Schweißnaht vor der Stirnseite des Rohres, so dass die Schweißnaht ebenfalls einen Mindestabstand zur eintrittseitigen Rohrplattenseite einhält. Zweckmäßig wird dazu das Rohr in einem Abstand von mindestens 10 mm zur eintrittseitigen Rohrplattenseite im Rohrloch angeordnet. Dieser Abstand gewährleistet in der Regel einen ausreichenden Mindestabstand der Schweißnaht zur eintrittseitigen Rohrplattenseite.

Bevorzugt erfolgt die Aufweitung des Rohrs im Rohrloch durch hydraulisches Aufweiten und/oder durch Anwalzen des Rohres gegen die Wand des Rohrloches. Dabei wird zweckmäßiger Weise das Rohr so aufgeweitet, dass sich die Rohrplatte im Kontaktbereich mit dem Rohr gerade nicht plastisch verformt. Die zur Aufweitung oder zum Anwalzen gewählten Kräfte werden also so gewählt, dass das Rohr möglichst spaltfrei an der Wand des Rohrloches anliegt, aber die Rohrplatte durch das Festlegen nicht bleibend verformt wird. Am Besten wird das Rohr im Rohrloch mit Hilfe von automatischen Schweißköpfen verschweißt.

Besonders vorteilhaft ist das erfindungsgemäße Verfahren, wenn das Rohr mit einer Rohrplatte verbunden wird, die zumindest auf ihrer eintrittsseitigen Plattenseite eine Plattenschutzschicht aufweist. Dies liegt daran, dass die eintrittsseitige Rohrplattenseite bei diesem Verfahren zumindest weitestgehend unbeeinflusst bleibt, so dass eine zu Korrosionen führende Verletzung oder Verformung der Plattenschutzschicht wirksam verhindert wird. Die Plattenschutzschicht kann beispielsweise aus einem Metall, Kunststoff, Lack oder Gummi bestehen.

Bevorzugt wird die gesamte Schweißnaht und ein kurzer innenseitiger Bereich des Rohrs mit der Schutzschicht beschichtet. Die Schutzsicht erstreckt sich also auch in das Rohr hinein. Somit wird nicht nur die Schweißnaht sondern auch der Übergangsbereich zwischen Schweißnaht und Rohr geschützt.

Zweckmäßigerweise wird zur Beschichtung eine zumindest die Schweißnaht und einen kurzen innenseitigen Bereich des Rohrs abdeckende Hülse in das Rohrloch gesteckt. Die Hülse ist also mindestens so lang, dass sie bis in das Rohr hineinreicht. Damit gelingt die Aufbringung einer durchgängigen Schutzschicht auf besonders einfache Weise. Von besonderem Vorteil ist es, wenn die Hülse einen über das Rohrloch überstehenden Rand aufweist und so in das Rohrloch eingebracht wird, dass der Rand außen auf der eintrittseitigen Plattenseite aufliegt. Dies sichert die Hülse gegen ein Verrutschen in das Rohr hinein und erleichtert die ordnungsgemäße Befestigung der Hülse.

Bevorzugt wird die Hülse in das Bohrloch geklebt. Alternativ oder ergänzend wird sie durch Aufweiten im Bohrloch und/oder im Rohr befestigt. In einer besonders vorteilhaften Weiterbildung bestehen die Hülse und die Plattenschutzschicht aus Titan und werden zumindest am Rand der Hülse miteinander verschweißt. Damit kann ergänzend oder zusätzlich der Rand der Hülse zur Abdichtung und Befestigung herangezogen werden.

Nachfolgend wird das erfindungsgemäße Verfahren anhand von zwei in der Zeichnung dargestellten Ausführungsbeispielen näher erläutert. Darin zeigen schematisch:
- Fig. 1: einen Schnitt durch ein erstes Ausführungsbeispiel eines erfindungsgemäß in einer Rohrplatte befestigten Rohres;
- Fig. 2: den vergrößerten Ausschnitt A des in Fig. 1 gezeigten ersten Ausführungsbeispiels;
- Fig. 3: eine vergrößerte Schnittdarstellung eines zweiten Ausführungsbeispiels eines erfindungsgemäß in einer Rohrplatte befestigten Rohres.

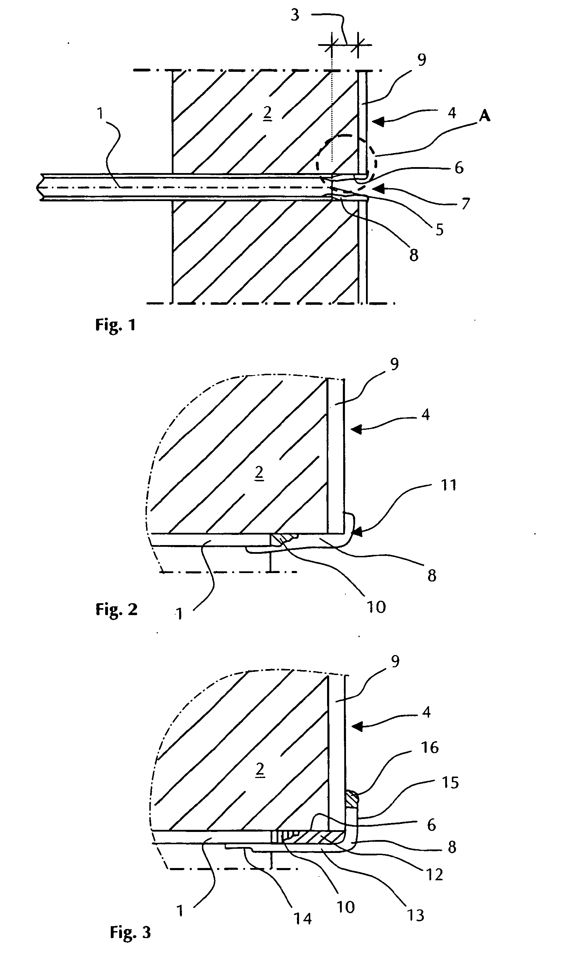

Bei dem in Fig. 1 gezeigten ersten Ausführungsbeispiel handelt es sich um einen auszugsweise dargestellten Schnitt durch einen mit Titan berohrten Turbinenkondensator bei dem die Randrohre durch hochfeste, tropfenschlagbeständige austenitische Rohre ersetzt worden sind. Der in Fig. 1 gezeigte Ausschnitt zeigt ein solches Kondensatorrohr 1. Dieses wird in einer hier als Rohrloch 7 bezeichneten Bohrung in einer Rohrplatte 2 gehalten. Die Rohrplatte 2 besteht hier aus einem relativ weichen niedrig legierten Kohlenstoffstahl und ist an ihrer eintrittsseitigen Rohrplattenseite 4 mit einer Plattenschutzschicht 9 aus Titan plattiert. Bei dem hier gezeigten Ausführungsbeispiel erfolgte die Befestigung des Kondensatorrohrs 1 in der Rohrplatte 2 so, dass das Rohr 1 zunächst in einem Abstand 3 zur eintrittsseitigen Rohrplattenseite 4 angeordnet und dort durch hydraulisches Aufweiten festgelegt worden ist. Danach wurde das Rohr 1 stirnseitig an seinem Rohrende 5 mit der Wand 6 des Rohrloches 7 verschweißt. Abschließend wurde der Bereich zwischen Rohrende 5 und eintrittsseitigen Rohrplattenseite 4 mit einer Schutzschicht 8 aus einem Epoxyd-Kunststoff überzogen.

Wie man aus der in Fig. 2 gezeigten vergrößerten Darstellung des in Fig. 1 gezeigten Ausschnitts A erkennen kann, wird die vor dem Rohrende 5 liegende Schweißnaht 10 von der sich bis ins Rohr 1 erstreckenden Schutzschicht 8 überdeckt. Auch erkennt man in dieser Darstellung, dass sowohl das Rohr 1 als auch die Schweißnaht 10 beabstandet zur Kante 11 des Rohrlochs 7 angeordnet sind. Die Schutzschicht 8 erstreckt sich hier zur besseren Abdichtung um die Kante 11 herum bis über einen Randbereich der Plattenschutzschicht 9.

Bei dem in Fig. 3 dargestellten Ausführungsbeispiel ist die Schutzschicht 8 eine an die Wand 6 des Bohrlochs 7 mit Epoxydharz-Klebstoff 12 geklebte Hülse 13. Die Hülse 13 erstreckt sich einige Millimeter weit in das-Rohr 1 hinein und ist an ihrem dortigen Ende 14 mittels hydraulischem Aufweiten am Rohr 1 festgelegt worden. Auf ihrer anderen Seite weist die Hülse 13 einen Rand 15 auf, der breiter ist als das Rohrloch 7. Der Rand 15 liegt auf der Plattierung 9 der Rohrplatte 2 auf und ist mit dieser an seinem Randende 16 verschweißt worden.

## Patentansprüche

1. Verfahren zur Verbindung eines Rohres (1) aus austenitischem Stahl mit einer Rohrplatte (2) aus Kohlenstoffstahl, bei dem das Rohr (1) mit seiner Außenseite an der Wand (6) eines Rohrlochs (7) in der Rohrplatte (2) befestigt wird, wobei ein Rohrende (5) im Rohrloch (7) nach innen beabstandet zu einer eintrittsseitigen Rohrplattenseite (4) angeordnet wird und dort durch Aufweiten des Rohres (1) festgelegt wird, wobei das Rohrende (5) stirnseitig mit der Wand (6) des Rohrloches (7) verschweißt wird, und wobei der sich zwischen dem Rohrende (5) und der eintrittseitigen Rohrplattenseite (4) erstreckende Bereich der Wand (6) des Rohrloches (7) mit einer Schutzschicht (8) versehen wird,
**dadurch gekennzeichnet,**
**dass** das Rohr (1) in einem Abstand (3) zur eintrittseitigen Rohrplattenseite (4) angeordnet wird, der größer ist, als die Breite einer sich beim Schweißen einstellende Schweißnaht (10) vor der Stirnseite (5) des Rohres, so dass die Schweißnaht (10) ebenfalls einen Mindestabstand zur eintrittseitigen Rohrplattenseite (4) einhält.

2. Verfahren nach Anspruch 1,
**dadurch gekennzeichnet,**
**dass** das Rohr (1) in einem Abstand (3) von mindestens 10 mm zur eintrittseitigen Rohrplattenseite (4) im Rohrloch (7) angeordnet wird.

3. Verfahren nach einem der vorhergehenden Ansprüche,
**dadurch gekennzeichnet,**
**dass** die Aufweitung des Rohrs (1) im Rohrloch (7) durch hydraulisches Aufweiten und/oder durch Anwalzen des Rohres (1) gegen die Wand (6) des Rohrloches (7) erfolgt.

4. Verfahren nach einem der vorhergehenden Ansprüche,
**dadurch gekennzeichnet,**
**dass** das Rohr (1) so aufgeweitet wird, dass sich die Rohrplatte (2) im Kontaktbereich mit dem Rohr (1) gerade nicht plastisch verformt.

5. Verfahren nach einem der vorhergehenden Ansprüche,
**dadurch gekennzeichnet,**
**dass** das Rohr (1) im Rohrloch (7) mit Hilfe von automatischen Schweißköpfen verschweißt wird.

6. Verfahren nach einem der vorhergehenden Ansprüche,
**dadurch gekennzeichnet,**
**dass** das Rohr (1) mit einer Rohrplatte (2) verbunden wird, die zumindest auf ihrer eintrittsseitigen Plattenseite (4) eine Plattenschutzschicht (9) aufweist.

7. Verfahren nach einem der vorhergehenden Ansprüche,
**dadurch gekennzeichnet,**
**dass** die gesamte Schweißnaht (10) und ein kurzer innenseitiger Bereich des Rohrs (1) mit der Schutzschicht (8) beschichtet wird.

8. Verfahren nach einem der vorhergehenden Ansprüche,
**dadurch gekennzeichnet,**
**dass** zur Beschichtung eine zumindest die Schweißnaht (10) und einen kurzen innenseitigen Bereich des Rohrs (1) abdeckende Hülse (13) in das Rohrloch (7) gesteckt wird.

9. Verfahren nach einem der vorhergehenden Ansprüche,
**dadurch gekennzeichnet,**
**dass** die Hülse (13) einen über das Rohrloch (7) überstehenden Rand (15) aufweist und so in das Rohrloch (7) eingebracht wird, dass der Rand (15) außen auf der eintrittseitigen Plattenseite (4) aufliegt.

10. Verfahren nach einem der vorhergehenden Ansprüche,
**dadurch gekennzeichnet,**
**dass** die Hülse (13) in das Bohrloch (7) geklebt wird.

11. Verfahren nach einem der vorhergehenden Ansprüche,
**dadurch gekennzeichnet,**
**dass** die Hülse (13) durch Aufweiten im Bohrloch (7) und/oder im Rohr (1) befestigt wird.

12. Verfahren nach einem der vorhergehenden Ansprüche,
**dadurch gekennzeichnet,**
**dass** die Hülse (13) und die Plattenschutzschicht (9) aus Titan bestehen und zumindest am Rand (15) der Hülse (13) miteinander verschweißt werden.

## Claims

1. A method for connecting a pipe (1) made of austenitic steel to a pipe plate (2) made of carbon steel, in which the pipe (1) is fastened using its outer side on the wall (6) of a pipe hole (7) in the pipe plate (2), a pipe end (5) being situated in the pipe hole (7) spaced inward to an entry-side pipe plate side (4) and being fixed there by widening the pipe (1), the pipe end (5) being frontally welded to the wall (6) of the pipe hole (7), and the area of the wall (6) of the pipe hole (7), which extends between the pipe end (5) and the entry-side pipe plate side (4), being provided with a protective layer (8),
**characterized in that** the pipe (1) is situated at a distance (3) to the entry-side pipe plate side (4) which is greater than the width of a weld seam (10), which results upon welding, in front of the front side (5) of the pipe, so that the weld seam (10) also maintains a minimum distance to the entry-side pipe plate side (4).

2. The method according to Claim 1,
**characterized in that** the pipe (1) is situated at a distance (3) of at least 10 mm to the entry-side pipe plate side (4) in the pipe hole (7).

3. The method according to one of the preceding claims,
**characterized in that** the widening of the pipe (1) in the pipe hole (7) is performed by hydraulic widening and/or by rolling the pipe (1) against the wall (6) of the pipe hole (7).

4. The method according to one of the preceding claims,
**characterized in that** the pipe (1) is widened in such a way that the pipe plate (2) does not deform plastically in particular in the contact area with the pipe (1).

5. The method according to one of the preceding claims,
**characterized in that** the pipe (1) is welded in the pipe hole (7) with the aid of automatic welding heads.

6. The method according to one of the preceding claims,
**characterized in that** the pipe (1) is connected to a pipe plate (2), which has a plate protective layer (9) at least on its entry-side plate side (4).

7. The method according to one of the preceding claims,
**characterized in that** the entire weld seam (10) and a short interior area of the pipe (1) are coated using the protective layer (8).

8. The method according to one of the preceding claims,
**characterized in that** a sleeve (13), which covers at least the weld seam (10) and a short interior area of the pipe (1), is inserted into the pipe hole (7) for the coating.

9. The method according to one of the preceding claims,
**characterized in that** the sleeve (13) has an edge (15), which protrudes beyond the pipe hole (7), and is introduced into the pipe hole (7) in such a way that the edge (15) rests externally on the entry-side plate side (4).

10. The method according to one of the preceding claims,
**characterized in that** the sleeve (13) is glued in the pipe hole (7).

11. The method according to one of the preceding claims,
**characterized in that** the sleeve (13) is fastened in the pipe hole (7) and/or in the pipe (1) by widening.

12. The method according to one of the preceding claims,
**characterized in that** the sleeve (13) and the plate protective layer (9) comprise titanium and are welded to one another at least on the edge (15) of the sleeve (13).

## Revendications

1. Procédé pour l'assemblage d'un tube (1) en acier austénitique avec une plaque tubulaire (2) en acier au carbone, dans lequel le tube (1) est fixé par sa face extérieure sur la paroi (6) d'un trou tubulaire (7) dans la plaque tubulaire (2), dans lequel une extrémité de tube (5) est disposée dans le trou tubulaire (7) à distance vers l'intérieur d'une face de la plaque tubulaire du côté d'entrée (4) et y est fixée par élargissement du tube (1), dans lequel l'extrémité du tube (5) est soudée sur sa face d'extrémité à la paroi (6) du trou tubulaire (7) et dans lequel la partie de la paroi (6) du trou tubulaire (7) s'étendant entre l'extrémité du tube (5) et la face de la plaque tubulaire du côté d'entrée (4) est munie d'une couche de protection (8), **caractérisé en ce que** le tube (1) est disposé à une distance (3) de la face de la plaque tubulaire du côté d'entrée (4) supérieure à la largeur d'une soudure (10) se créant lors du soudage devant la face d'extrémité (5) du tube, de sorte que la soudure (10) respecte également une distance minimum par rapport à la face de la plaque tubulaire du côté d'entrée (4).

2. Procédé selon la revendication 1, **caractérisé en ce que** le tube (1) est disposé dans le trou tubulaire (7) à une distance (3) d'au moins 10 mm de la face de la plaque tubulaire du côté d'entrée (4).

3. Procédé selon l'une des revendications précédentes, **caractérisé en ce que** l'élargissement du tube (1) dans le trou tubulaire (7) est réalisé par élargissement hydraulique et/ou roulage du tube (1) contre la paroi (6) du trou tubulaire (7).

4. Procédé selon l'une des revendications précédentes, **caractérisé en ce que** le tube (1) est élargi de telle façon que la plaque tubulaire (2) ne subit pas, de justesse, une déformation plastique dans la zone de contact avec le tube (1).

5. Procédé selon l'une des revendications précédentes, **caractérisé en ce que** le tube (1) est soudé dans le trou tubulaire (7) à l'aide de têtes de soudage automatiques.

6. Procédé selon l'une des revendications précédentes, **caractérisé en ce que** le tube (1) est assemblé avec une plaque tubulaire (2) qui présente au moins sur sa face de plaque du côté d'entrée (4) une couche de protection de la plaque (9).

7. Procédé selon l'une des revendications précédentes, **caractérisé en ce que** toute la soudure (10) et une courte zone intérieure du tube (1) sont revêtues de la couche de protection (8).

8. Procédé selon l'une des revendications précédentes, **caractérisé en ce que** pour le revêtement, une douille (13) recouvrant au moins la soudure (10) et une courte partie intérieure du tube (1) est enfoncée dans le trou tubulaire (7).

9. Procédé selon l'une des revendications précédentes, **caractérisé en ce que** la douille (13) présente un bord (15) dépassant par-dessus le trou tubulaire (7) et est introduite dans le trou tubulaire (7) de telle façon que le bord (15) repose à l'extérieur sur la face de la plaque du côté d'entrée (4).

10. Procédé selon l'une des revendications précédente, **caractérisé en ce que** la douille (13) est collée dans le trou percé (7).

11. Procédé selon l'une des revendications précédentes, **caractérisé en ce que** la douille (13) est fixée par élargissement dans le trou percé (7) et/ou dans le tube (1).

12. Procédé selon l'une des revendications précédentes, **caractérisé en ce que** la douille (13) et la couche de protection de la plaque (9) se composent de titane et sont soudées entre elles au moins sur le bord (15) de la douille (13).
